# FASCICULE DE BREVET EUROPEEN

(11) **EP 2 013 074 B1**
(45) Date de publication et mention de la délivrance du brevet: **28.10.2009**
(21) Numéro de dépôt: 07734472.9
(22) Date de dépôt: 03.05.2007
(51) Int. Cl.: B62J 17/08

(54) **DISPOSITIF DE COUVERTURE MODULABLE POUR VEHICULE TERRESTRE**
MODULARE ABDECKVORRICHTUNG FÜR LANDFAHRZEUG
MODULAR COVER DEVICE FOR LAND VEHICLE

(30) Priorité: 04.05.2006 FR 0651619
(43) Date de publication de la demande: 14.01.2009
(73) Titulaire: Tonnelier, Patrick, 75013 Paris (FR)
(72) Inventeur: Tonnelier, Patrick, 75013 Paris (FR)
(86) Numéro de dépôt international: PCT/IB2007/001155
(87) Numéro de publication internationale: WO 2007/129193

(56) Documents cités:
- DE-U1- 29 904 644
- FR-A- 2 649 064
- FR-A- 2 768 389

## Description

### DOMAINE TECHNIQUE DE L'INVENTION

La présente invention concerne les véhicules terrestres à deux ou trois roues, et plus particulièrement les véhicules motorisés tels qu'une motocyclette par exemple.

Les véhicules à deux ou trois roues connus du type motocyclette ou scooter sont généralement dépourvus de tout dispositif de couverture. Leur utilisation est ainsi limitée à certaines périodes de l'année où la météo se montre clémente. En effet, l'usage d'un véhicule tel qu'une motocyclette par temps de pluie s'avère très contraignant pour la tenue vestimentaire du conducteur, et les périodes de grand froid peuvent entraîner une paresthésie, c'est-à-dire un trouble de la sensibilité qui se traduit par une perception faussée des sensations du conducteur, ce qui peut s'avérer dangereux.

On a ainsi déjà réalisé des véhicules à deux roues à cockpit fermé, utilisés particulièrement pour la vitesse. Le cockpit d'un tel véhicule est entièrement fermé et inamovible, ce qui rend son usage très contraignant et limité.

On connaît également des véhicules à dispositif de couverture partielle tels que le C1 produit par la société BMW. Le C1 est un scooter à couverture partielle permanente à l'aide d'un toit rigide et indémontable. Son dispositif de couverture ne permet cependant pas une protection latérale, et l'utilisateur sera ainsi trempé en cas de forte pluie par vent de travers.

En outre, un dispositif de couverture partielle provoque des remous perturbateurs dans l'écoulement de l'air autour du véhicule, rendant son comportement routier délicat par grand vent.

Les conducteurs des véhicules à deux ou trois roues connus comportant un dispositif de couverture éprouvent également un sentiment de manque de liberté lié au caractère permanent du dispositif de couverture de leur véhicule. En effet, beaucoup de conducteurs de véhicules tels que des motocyclettes considèrent que la présence d'un dispositif de couverture permanent complet ou partiel sur leur véhicule les prive des sensations qu'ils recherchent par la conduite de celui-ci.

Les dispositifs de couverture connus à ce jour utilisés pour des véhicules à quatre roues se révèlent être lourds, difficiles à manier, encombrants, et surtout difficiles voire impossibles à adapter sur tout autre véhicule tel qu'un véhicule à deux ou trois roues par exemple. En outre, ceux-ci n'offrent souvent que la possibilité d'une couverture totale et d'une ouverture totale. Ces dispositifs sont ainsi peu modulables car n'offrant aucun moyen terme entre une position d'ouverture totale et une position de couverture totale.

Le document FR 2 649 064 décrit un habitacle télescopique rigide pour véhicule à deux roues, Celui-ci est constitué par l'assemblage et la coopération de trois secteurs de coque en plastique transparents dont un est fixe et deux sont mobiles en pivotement pour-permettre de couvrir ou découvrir le poste de pilotage du véhicule à deux roues. Les secteurs de coque mobiles sont destinés à être manoeuvrés ensemble et donnent le choix à l'utilisateur entre une position de couverture totale ou une position d'ouverture totale. Aucune position intermédiaire des secteurs de coque n'est possible pour réaliser la couverture partielle du poste de pilotage.

Le document FR 2 768 389 décrit un véhicule à deux roues comportant un toit rétractable constitué en deux parties et des portes latérales démontables, autorisant la couverture et l'ouverture totales du poste de pilotage. Aucune couverture partielle du poste de pilotage n'est rendue possible, et il est nécessaire de démonter les portes latérales pour découvrir le poste de pilotage.

Le document DE 299 04 644 décrit un dispositif de couverture d'un fauteuil roulant à plusieurs secteurs de coque articulés en pivotement et déplaçables entre une position d'ouverture totale et une position de couverture totale, sans donner la possibilité d'une position intermédiaire réalisant une couverture partielle du poste de pilotage.

Il y a donc un besoin d'un dispositif de couverture pour véhicule terrestre qui puisse être modulé en fonction des conditions météorologiques et du souhait du conducteur, afin que celui-ci puisse être abrité en cas de mauvaises conditions météorologiques, et que celui-ci puisse être partiellement découvert ou complètement découvert par beau temps.

### EXPOSE DE L'INVENTION

Un premier problème proposé par l'invention est de concevoir un dispositif de couverture modulable pour véhicule terrestre permettant à l'utilisateur d'utiliser son véhicule par tous temps et selon son agrément en modulant le dispositif de couverture pour être sélectivement totalement abrité par le dessus et sur les côtés, ou partiellement découvert, voire totalement découvert, au gré de l'utilisateur.

Simultanément, l'invention cherche à concevoir un dispositif de couverture modulable qui puisse être modulé sans nécessiter l'utilisation d'outils ni le retrait d'éléments de carrosserie du véhicule qu'il serait nécessaire de stocker.

Un autre problème proposé par l'invention est de concevoir un dispositif de couverture modulable léger, facile à manier et facilement adaptable sur un véhicule terrestre et plus particulièrement sur un véhicule à deux ou trois roues.

Selon un autre aspect, l'invention vise à concevoir un dispositif de couverture modulable qui ne nuise pas à la vision de l'environnement qu'aura le conducteur en conduisant son véhicule, et qui ne perturbe pas le comportement routier du véhicule, afin de ne pas détériorer la sécurité du conducteur.

Enfin, un autre problème que cherche à résoudre l'invention est de réaliser un dispositif de couverture modulable dont la mise en oeuvre est simple, dont la fabrication est peu onéreuse et dont le fonctionnement est simple et rapide.

Pour atteindre ces objets ainsi que d'autres, l'invention propose un dispositif de couverture de poste de pilotage pour véhicule terrestre ; selon l'invention :
- le dispositif de couverture de poste de pilotage est une coque modulable comprenant une pluralité de secteurs de coque destinés à être articulés en pivotement selon leurs sommets respectifs autour d'un même axe de pivotement et déplaçables entre une position d'ouverture et une position de couverture,
- en position de couverture, les secteurs de coque sont pivotés en venant à recouvrement partiel les uns à la suite des autres,
- en position d'ouverture, les secteurs de coque sont pivotés en recouvrement les uns des autres, le recouvrement des secteurs de coque étant alors plus important que celui dans la position de couverture,
- les secteurs de coque sont déplaçables en pivotement indépendamment les uns des autres.

Les secteurs de coque conservent sensiblement leur forme lors de l'utilisation, tant lors du roulage du véhicule que lors des pivotements.

Un tel dispositif permet de couvrir partiellement ou totalement le poste de pilotage d'un véhicule terrestre, ou bien de découvrir totalement celui-ci. On permet ainsi à l'utilisateur d'utiliser son véhicule par tous temps et selon son agrément par un dispositif de couverture modulable adapté aux conditions météorologiques ou autres.

On peut ainsi découvrir partiellement le poste de pilotage en pivotant certains secteurs de coque vers l'avant et d'autres secteurs de coque vers l'arrière, les secteurs de coque antérieurs faisant office de pare-brise.

Les secteurs de coque antérieurs faisant pare-brise limitent fortement, voire empêchent, les flux d'air dus à l'avance du véhicule de s'engouffrer dans les secteurs de coque postérieurs. On évite ainsi que le train arrière du véhicule ne soit déstabilisé.

L'utilisateur pourra être plus ou moins abrité par le dispositif de couverture modulable, jusqu'à être totalement protégé et ne plus subir les agressions météorologiques telles que le froid et l'humidité. Le conducteur du véhicule gardera alors toutes ses facultés.

Par véhicule terrestre, on entend désigner tout type de véhicule permettant le transport de personnes, tel qu'un véhicule à roues (deux, trois et plus), à chenilles (motoneige), etc.

De préférence, les secteurs de coque peuvent avoir un profil transversal sensiblement en forme de « C ».

De préférence, le dispositif de couverture peut comporter des moyens d'étanchéité entre les secteurs de coque adjacents, de préférence des joints qui sont comprimés entre les secteurs de coque adjacents lorsque ceux-ci viennent à recouvrement partiel l'un de l'autre.

De préférence, les secteurs de coque du dispositif de couverture peuvent être réalisés en matière plastique, de préférence en polycarbonate transparent.

Le dispositif de couverture selon l'invention peut être avantageusement utilisé pour la couverture du poste de pilotage d'un véhicule terrestre se développant et se déplaçant selon une direction longitudinale et comportant au moins un poste de pilotage avec un siège de conducteur.

De préférence, on peut prévoir que :
- les secteurs de coque sont articulés, en pivotement, sur le châssis du véhicule selon leurs sommets respectifs autour d'un même axe de pivotement qui est transversal,
- en position d'ouverture, les secteurs de coque sont pivotés vers l'avant du véhicule et/ou vers l'arrière du véhicule, laissant à découvert au moins le poste de pilotage du véhicule,
- en position de couverture, les secteurs de coques sont pivotés en venant à recouvrement seulement partiel les uns à la suite des autres, de façon à recouvrir une partie au moins du poste de pilotage latéralement et par le dessus,
- les secteurs de coque sont conformés de façon à pouvoir coopérer ensemble en une position de couverture totale pour la fermeture complète du poste de pilotage.

La couverture totale du poste de pilotage, latéralement et par le dessus, permet de définir un habitacle qui pourra être chauffé.

En outre, cet habitacle formé par les secteurs de coque en position de couverture totale permet d'abriter le poste de pilotage du véhicule lorsque celui-ci est en stationnement, et permet donc de le protéger des précipitations météorologiques, de la pollution, ou encore des déjections des oiseaux.

Avantageusement, le véhicule équipé d'un dispositif de couverture selon l'invention peut comprendre :
- plusieurs secteurs de coque postérieurs pouvant être pivotés vers l'arrière du véhicule en position d'ouverture où ils sont engagés dans un logement prévu dans le carénage du véhicule,
- au moins un secteur de coque antérieur pouvant être pivoté vers l'avant du véhicule en position d'ouverture, et qui est manoeuvrable indépendamment des secteurs de coque postérieurs.

Avantageusement, le véhicule peut ne comprendre que deux secteurs de coque postérieurs et un secteur de coque antérieur.

De préférence, le véhicule peut comporter des moyens de verrouillage des secteurs de coque au moins en position de couverture totale. On protège ainsi le poste de pilotage des dégradations volontaires commises par un tiers mal intentionné.

L'habitacle fermé, matérialisé par les secteurs de coque en position de couverture totale, pourra ainsi contenir des effets personnels laissés par le conducteur, l'habitacle offrant un volume important et bien supérieur à celui des coffres utilisés dans un véhicule à deux ou trois roues connu à ce jour.

Avantageusement, le véhicule peut comporter un châssis à cadre périphérique en double poutre.

De préférence, le véhicule peut comporter un poste de passager prévu derrière le poste de pilotage et pouvant être également sélectivement découvert ou couvert latéralement et sur le dessus par un ou plusieurs secteurs de coque, avec de préférence un siège de passager situé à une hauteur inférieure ou égale à celle du siège du conducteur.

Avantageusement, le véhicule peut être monotrace, comportant de préférence deux roues.

De préférence, le poste de pilotage du véhicule peut être un poste de pilotage à plancher plat, de préférence du type de celui d'un scooter.

Avantageusement, le véhicule équipé d'un dispositif de couverture selon l'invention peut comporter un dispositif de stabilisation pour maintenir le véhicule en position verticale lorsque celui-ci est à l'arrêt, le dispositif de stabilisation pouvant comprendre de préférence des roulettes latérales escamotables.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une vue schématique de côté d'un véhicule équipé d'un dispositif de couverture modulable selon l'invention, avec le dispositif de couverture modulable en position de couverture totale ;
- la figure 2 est une vue schématique de côté du véhicule de la figure 1, avec le dispositif de couverture modulable en position de couverture partielle ;
- la figure 3 est une vue schématique de côté du véhicule des figures 1 et 2 dépourvu de dispositif de couverture modulable ; et
- la figure 4 est une vue schématique en coupe transversale selon le plan A-A de la figure 1.

### DESCRIPTION DES MODES DE REALISATION PREFERES

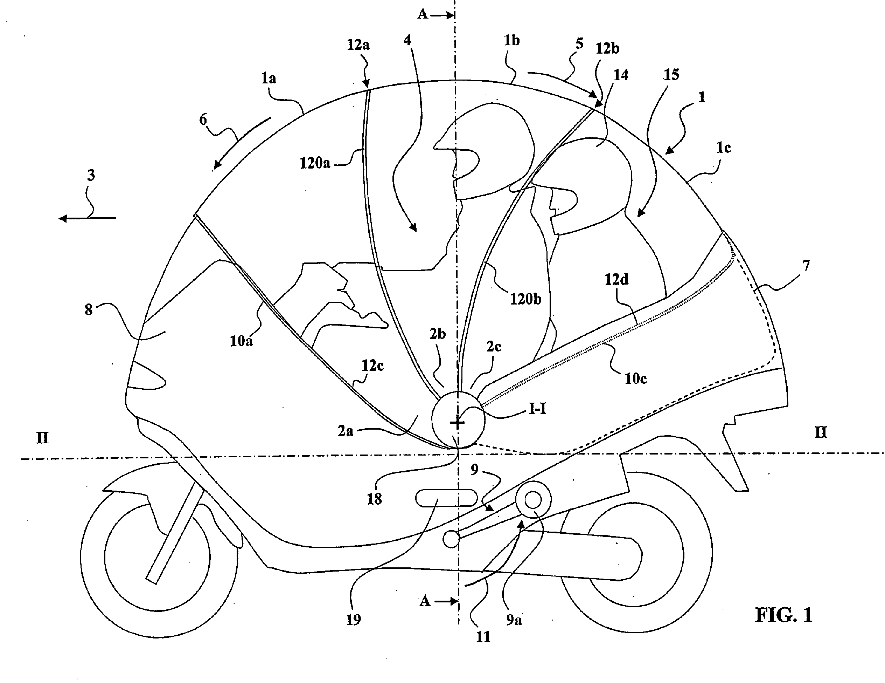

Dans le mode de réalisation illustré sur la figure 1, le dispositif de couverture modulable comporte une coque modulable 1 comprenant trois secteurs de coque 1 a, 1b et 1 c, articulés en pivotement sur le châssis d'un véhicule selon leurs sommets respectifs 2a, 2b et 2c autour d'un même axe de pivotement transversal I-I perpendiculaire à la direction de déplacement du véhicule qui est elle-même matérialisée par l'axe longitudinal II-II. L'axe de pivotement transversal I-I est en position inférieure par rapport aux secteurs de coque 1 a, 1b et 1 c, qui viennent le recouvrir par dessus. Les secteurs de coque 1 a, 1b et 1c coopèrent ensemble en une position de couverture totale telle qu'illustrée sur la figure 1 en venant à recouvrement partiel les uns à la suite des autres pour la fermeture complète du poste de pilotage 4 du véhicule.

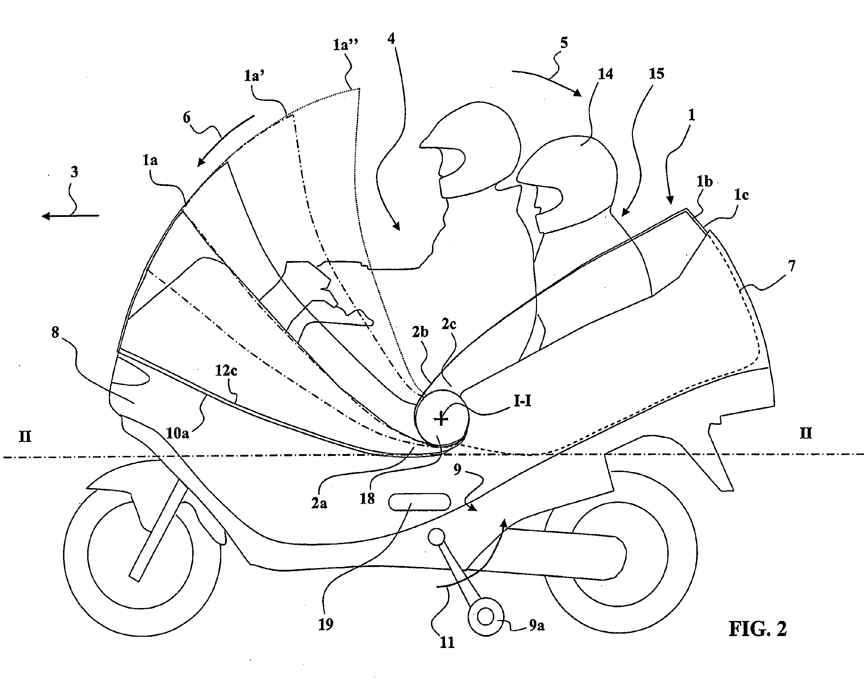

Dans le mode de réalisation illustré sur les figures 1 et 2, les secteurs de coque 1b et 1c peuvent être pivotés vers l'arrière du véhicule selon le mouvement représenté par la flèche 5, afin de laisser à découvert une partie au moins du poste de pilotage 4 du véhicule.

Le secteur de coque 1a peut quant à lui être pivoté vers l'avant du véhicule selon le mouvement représenté par la flèche 6, afin de laisser à découvert une partie au moins du poste de pilotage 4 du véhicule.

II est ainsi possible de découvrir partiellement ou totalement le poste de pilotage 4 du véhicule, comme cela est plus particulièrement représenté sur la figure 2.

Sur la figure 2, les secteurs de coque 1b et 1c, qui sont les secteurs de coque postérieurs, sont pivotés vers l'arrière du véhicule en position d'ouverture où ils sont engagés dans un logement 7 prévu dans le carénage 8 du véhicule. Le secteur de coque 1 a, qui est le secteur de coque antérieur, est pivoté vers l'avant du véhicule en position d'ouverture. Les secteurs de coque 1b et 1c postérieurs sont ainsi rangés à l'abri dans le carénage 8 du véhicule et ne peuvent ainsi plus perturber la stabilité du véhicule en retenant une partie du flux d'air s'écoulant autour du véhicule.

Le rangement des secteurs de coque 1 b et 1 c dans le carénage 8 évité également toute détérioration de ceux-ci (rayures par exemple) et contribue à améliorer l'esthétique du véhicule.

Dans le mode de réalisation des figures 1 et 2, le secteur de coque 1a antérieur est manoeuvrable indépendamment des secteurs de coque 1b et 1c postérieurs. L'utilisateur dispose ainsi d'un secteur de coque 1a à l'avant du véhicule, qui peut être abaissé complètement sur l'avant du véhicule (secteur de coque 1a en trait plein sur la figure 2), ou qui peut être relevé à la guise du conducteur pour s'abriter de l'air et constituer ainsi un pare-brise modulable (voir les position 1a' et 1a" du secteur de coque 1 a, en traits mixtes et pointillés). Les positions 1a' et 1a" du secteur de coque 1a doivent être considérées comme des exemples et ne sont nullement limitatives.

Le secteur de coque 1a fait office de pare-brise : il protège de l'air le conducteur, et facilite l'écoulement de l'air autour du véhicule. On évite par la même occasion que l'air ne s'engouffre dans les secteurs de coque postérieurs 1b et 1c qui offrent une prise au vent importante lorsqu'ils sont basculés en arrière et risquent de déstabiliser le train arrière du véhicule s'ils ne sont pas rangés dans un logement du carénage du véhicule.

Il est cependant envisageable de chercher à basculer les trois secteurs de coque 1a, 1 b et 1 c vers l'arrière du véhicule pour découvrir le poste de pilotage 4. La partie découverte du poste de pilotage 4 dépend alors directement du recouvrement mutuel des secteurs de coque 1 a, 1 b et 1 c.

Grâce à un tel dispositif, l'utilisateur peut ainsi utiliser son véhicule par tous temps en étant totalement abrité latéralement et sur le dessus (figure 1) ou en étant partiellement ou totalement découvert (figure 2).

Le mouvement des secteurs de coque 1 a à 1 c s'effectue de façon simple et sans effort autour de l'axe transversal I-I sans avoir à utiliser d'outils et sans retirer d'élément de carénage.

La manipulation des secteurs de coque 1a à 1c est ainsi possible à tout moment et en tout lieu lorsque le conducteur le souhaite.

Lors de l'utilisation, chaque secteur de coque conserve sensiblement sa forme, et peut donc être relativement rigide. Cette rigidité relative apporte une plus grande sécurité, facilite les pivotements relatifs des secteurs de coque, et améliore l'étanchéité.

Dans le mode de réalisation illustré sur les figures 1 et 2, le dispositif de couverture modulable comporte seulement trois secteurs de coque 1a, 1 b et 1 c. Ce nombre limité de secteurs de coque 1 a, 1b et 1c est suffisant pour assurer une bonne modularité du dispositif de couverture du véhicule sans en compliquer outre mesure le fonctionnement. Il est cependant possible d'envisager un nombre différent de secteurs de coque.

Les secteurs de coque 1 a à 1 c ont un profil transversal sensiblement en forme de « C » et présentent donc une surface courbe sans arêtes vives. Le champ de vision du conducteur n'est ainsi pas troublé par la présence d'une arête qui déformerait la vision qu'aurait le conducteur de l'environnement de son véhicule.

En outre, un tel profil transversal en forme de « C » des secteurs de coque 1a à 1c permet d'obtenir une forme aérodynamique à bon coefficient de pénétration dans l'air lorsque les secteurs de coque 1a à 1c sont en position de couverture totale (figure 1). Le comportement routier du véhicule n'est ainsi pas détérioré par la présence du dispositif de couverture, et ce quelle que soit sa position (fermeture totale, partielle ou ouverture complète).

Dans le mode de réalisation représenté sur les figures 1 et 2, le véhicule terrestre est un véhicule monotrace à deux roues. Celui-ci ne peut donc pas tenir en équilibre à l'arrêt sans l'intervention du conducteur, par l'utilisation de ses jambes par exemple. Cependant, le carénage 8 du véhicule ne permet pas au conducteur de se servir de ses pieds pour maintenir le véhicule en position verticale lorsque celui-ci est à l'arrêt.

Il est ainsi prévu un dispositif de stabilisation 9 pour maintenir le véhicule en position verticale lorsque celui-ci est à l'arrêt, comprenant des roulettes latérales 9a escamotables. De tels dispositifs de stabilisation ont déjà été réalisés en effectuant par exemple un asservissement de la position des roulettes latérales 9a par rapport à la vitesse de déplacement du véhicule. Les roulettes latérales 9a peuvent également être commandées par l'utilisateur au moyen d'un commutateur.

Dans le cas de la figure 2, le véhicule à deux roues est à l'arrêt, étant maintenu en position verticale par les roulettes latérales 9a escamotables. Les utilisateurs peuvent ainsi s'installer sur leur siège sans crainte que le véhicule ne tombe sur le côté et sans avoir à le maintenir en équilibre. Dans le cas de la figure 1, le véhicule à deux roues est animé d'une vitesse de déplacement selon le sens défini par la flèche 3. La vitesse étant suffisante pour assurer le maintien vertical du véhicule, les roulettes latérales 9a sont remontées selon un mouvement illustré par la flèche 11.

Lorsque le véhicule doit s'arrêter, l'utilisateur commande la descente des roulettes latérales 9a selon un mouvement inverse de celui illustré par la flèche 11, afin de maintenir le véhicule en position verticale. La descente des roulettes latérales 9a peut en outre être asservie en fonction de la vitesse de déplacement du véhicule.

Sur la figure 1, le dispositif de couverture comporte des moyens d'étanchéité 12a et 12b entre les secteurs de coque adjacents 1 a, 1b et 1c. En l'occurrence, il s'agit de joints 120a et 120b qui sont comprimés entre les secteurs de coque adjacents 1 a, 1b et 1c lorsque ceux-ci viennent à recouvrement partiel l'un de l'autre.

II est également prévu des moyens d'étanchéité 12c et 12d entre le carénage 8 et les bords inférieurs 10a et 10c des secteurs de coques 1 a et 1 c.

On assure ainsi une étanchéité satisfaisante de l'habitacle défini par les secteurs de coque 1a à 1c disposés en position de couverture totale. II ne pourra ainsi pas entrer d'air dans l'espace intérieur de l'habitacle, ni d'eau qui ruisselle sur la face externe des secteurs de coque 1a à 1 c ou sur le carénage 8.

En outre, une telle étanchéité permet le cas échéant de chauffer de façon efficace l'habitacle défini par les secteurs de coque 1a à 1c en position de couverture totale, pour le plus grand confort du conducteur.

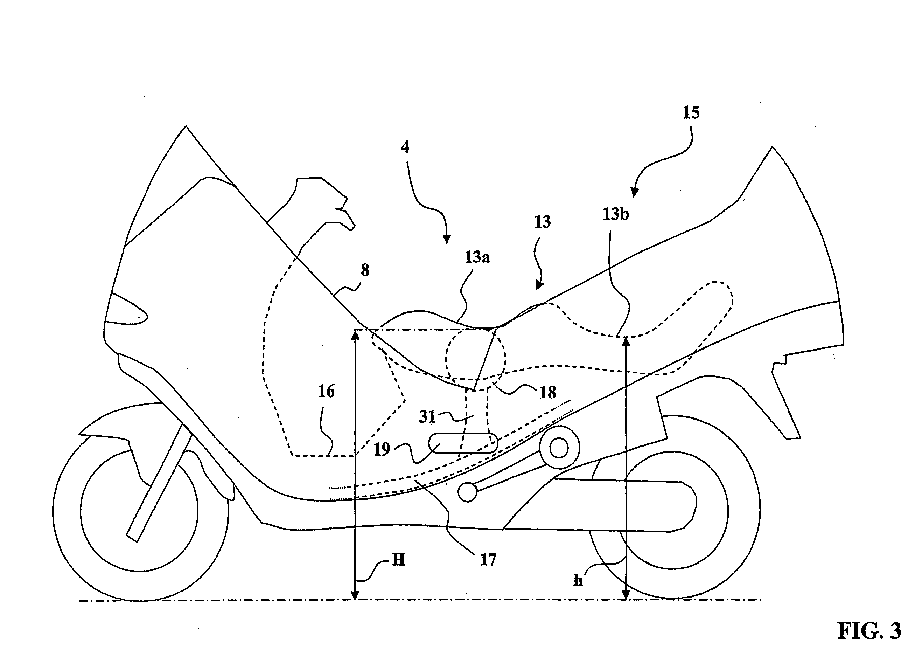

Dans le mode de réalisation illustré sur les figures 1 et 2, le véhicule comporte un poste de pilotage 4 et un poste de passager 15. On voit plus particulièrement sur la figure 3 que la selle 13 du véhicule comporte un siège de conducteur 13a et un siège de passager 13b. Le siège de passager 13b est situé à une hauteur h inférieure ou égale à la hauteur H du siège de conducteur 13a. La tête 14 du passager pourra ainsi être contenue dans l'habitacle défini par les secteurs postérieurs de coque 1b et 1c en position de couverture totale (figure 1). La position de la tête 14 du passager est ainsi compatible avec le mouvement de rotation des secteurs postérieurs de coque 1b et 1c, qui est un mouvement très simple.

Le véhicule du mode de réalisation illustré sur les figures 1 et 2 comporte donc un poste de passager 15 prévu derrière le poste de pilotage 4 et pouvant être également sélectivement découvert ou couvert latéralement et sur le dessus par les secteurs de coque 1 b et 1 c.

Il est mis en évidence sur la figure 3 que le poste de pilotage 4 est un poste de pilotage du type de celui d'un scooter. Le conducteur aura ainsi une position de conduite proche de celle d'un automobiliste. Le plancher 16 est un plancher plat qui facilite l'accès du conducteur au poste de pilotage 4 en enjambant le carénage 8 à l'aide d'un marchepied 19.

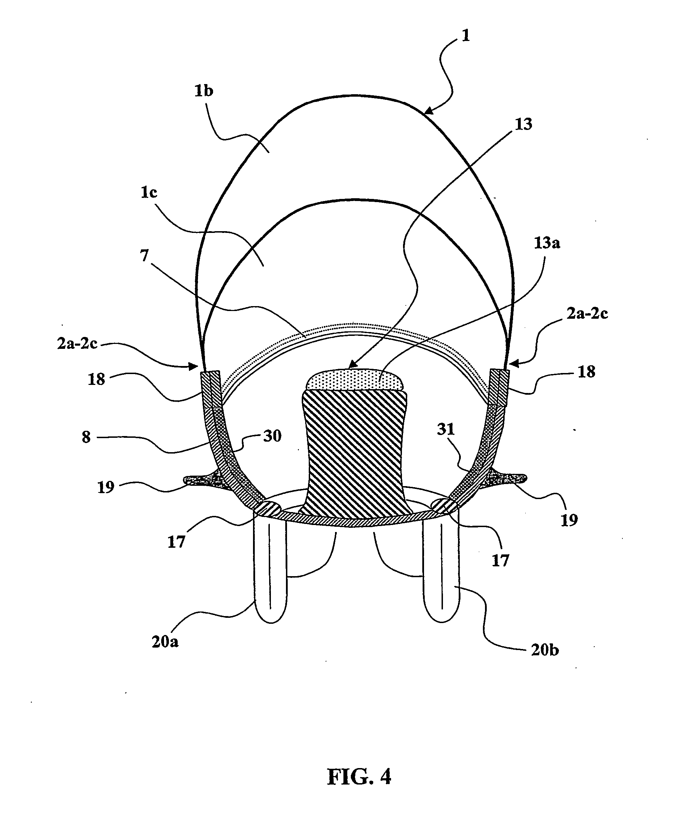

Il est mis en évidence sur la figure 4 que le châssis du véhicule comporte de chaque côté une poutre périphérique 17 sur laquelle est solidaire une zone d'articulation 18 des sommets 2a à 2c des secteurs de coque 1a à 1c (le secteur 1a n'est pas représenté car il ne se situe pas dans le plan de coupe). Le véhicule est ainsi doté d'un châssis à cadre périphérique en double poutre 17, ce qui lui confère une bonne rigidité en vue d'un comportement routier optimal et non dégradé par la présence du dispositif de couverture modulable.

Sur la figure 4, le véhicule est un véhicule à trois roues avec deux roues arrière 20a et 20b.

Il est également possible d'envisager un véhicule à trois roues comportant deux roues avant et une roue arrière.

Dans le cas d'un véhicule à trois roues, celui-ci peut être stable et ne pas avoir besoin d'être maintenu en position verticale. C'est le cas du véhicule de la figure 4 qui est dépourvu de roulettes latérales de stabilisation.

L'adaptation sur un véhicule du dispositif de couverture est aisée. Cette adaptation peut nécessiter, comme dans le cas des figures 1 à 4, l'ajout de deux bras 30 et 31 solidaires du châssis du véhicule, et sur lesquels sont rapportés les zones d'articulation 18. Une telle adaptation peut être réalisée assez facilement sur les véhicules à deux ou trois roues connus à ce jour.

Les secteurs de coque 1a à 1c sont réalisés par exemple en matière plastique, plus particulièrement en polycarbonate transparent. Ceci permet de réaliser les secteurs de coque 1a à 1c à faible coût, tout en assurant une bonne transparence pour la visibilité en conduite. En outre, le polycarbonate s'avère très résistant aux agressions météorologiques et facile d'entretien.

La présente invention n'est pas limitée aux modes de réalisation qui ont été explicitement décrits, mais elle en inclut les diverses variantes et généralisations contenues dans le domaine des revendications ci-après.

## Revendications

1. - Dispositif de couverture de poste de pilotage pour véhicule terrestre, dans lequel :
- le dispositif de couverture de poste de pilotage est une coque modulable (1) comprenant une pluralité de secteurs de coque (1a-1c) destinés à être articulés en pivotement selon leurs sommets respectifs (2a-2c) autour d'un même axe de pivotement (I-I) et déplaçables entre une position d'ouverture et une position de couverture,
- en position de couverture, les secteurs de coque (1a-1c) sont pivotés en venant à recouvrement partiel les uns à la suite des autres,
- en position d'ouverture, les secteurs de coque (1a-1c) sont pivotés en recouvrement les uns des autres, le recouvrement des secteurs de coque (1a-1c) étant alors plus important que celui dans la position de couverture,
**caractérisé en ce que** les secteurs de coque (1a-1c) sont déplaçables en pivotement indépendamment les uns des autres.

2. - Dispositif selon la revendication 1, **caractérisé en ce que** les secteurs de coque (1 a-1 c) ont un profil transversal sensiblement en forme de « C ».

3. - Dispositif selon l'une des revendications 1 ou 2, **caractérisé en ce qu'**il comporte des moyens d'étanchéité (12a, 12b) entre les secteurs de coque (1a-1c) adjacents, de préférence des joints (120a, 120b) qui sont comprimés entre les secteurs de coque (1 a-1 c) adjacents lorsque ceux-ci viennent à recouvrement partiel l'un de l'autre.

4. - Dispositif selon l'une quelconque des revendications 1 à 3,
**caractérisé en ce que** les secteurs de coque (1a-1c) sont réalisés en matière plastique, de préférence en polycarbonate transparent.

5. - Véhicule terrestre se développant et se déplaçant selon une direction longitudinale (II-II) et comportant au moins un poste de pilotage (4) avec un siège de conducteur (13a), **caractérisé en ce qu'**il comporte un dispositif de couverture selon l'une quelconque des revendications 1 à 4.

6. - Véhicule selon la revendication 5, **caractérisé en ce que** :
- les secteurs de coque (1a-1c) sont articulés en pivotement sur le châssis du véhicule selon leurs sommets respectifs (2a-2c) autour de l'axe de pivotement (I-I) qui est transversal,
- en position d'ouverture, les secteurs de coque (1a-1c) sont pivotés vers l'avant du véhicule et/ou vers l'arrière du véhicule, laissant à découvert au moins le poste de pilotage (4) du véhicule,
- en position de couverture, les secteurs de coque (1 a-1 c) sont pivotés en venant à recouvrement seulement partiel les uns à la suite des autres de façon à recouvrir une partie au moins du poste de pilotage (4) latéralement et par le dessus,
- les secteurs de coque (1a-1c) sont conformés de façon à pouvoir coopérer ensemble en une position de couverture totale pour la fermeture complète du poste de pilotage (4).

7. - Véhicule selon l'une des revendications 5 ou 6, **caractérisé en ce que :**
- plusieurs secteurs de coque (1 b, 1 c) postérieurs peuvent être pivotés vers l'arrière du véhicule en position d'ouverture où ils sont engagés dans un logement (7) prévu dans le carénage (8) du véhicule,
- au moins un secteur de coque (1a) antérieur peut être pivoté vers l'avant du véhicule en position d'ouverture, et est manoeuvrable indépendamment des secteurs de coque (1 b, 1 c) postérieurs.

8. - Véhicule selon la revendication 7, **caractérisé en ce qu'**il comporte deux secteurs de coque postérieurs (1b, 1c) et un secteur de coque antérieur (1a).

9. - Véhicule selon l'une quelconque des revendications 5 à 8,
**caractérisé en ce qu'**il comporte des moyens de verrouillage des secteurs de coque (1a-1c) au moins en position de couverture totale.

10. - Véhicule selon l'une quelconque des revendications 5 à 9,
**caractérisé en ce qu'**il comporte un châssis à cadre périphérique en double poutre (17).

11. - Véhicule selon l'une quelconque des revendications 5 à 10,
**caractérisé en ce qu'**il comporte un poste de passager (15) prévu derrière le poste de pilotage (4) et pouvant être également sélectivement découvert ou couvert latéralement et sur le dessus par un ou plusieurs secteurs de coque (1b-1c), avec de préférence un siège de passager (13b) situé à une hauteur (h) inférieure ou égale à celle (H) du siège de conducteur (13a).

12. - Véhicule selon l'une quelconque des revendications 5 à 11,
**caractérisé en ce qu'**il est monotrace, de préférence à deux roues.

13. - Véhicule selon la revendication 12, **caractérisé en ce que** le poste de pilotage (4) est un poste de pilotage à plancher plat, de préférence du type de celui d'un scooter.

14. - Véhicule selon l'une des revendications 12 ou 13, **caractérisé en ce qu'**il comporte un dispositif de stabilisation (9) pour le maintenir en position verticale lorsqu'il est à l'arrêt, comprenant de préférence des roulettes latérales (9a) escamotables.

## Claims

1. Covering device for a control cabin of a land vehicle, in which:
- the covering device for a control cabin is an adjustable shell (1) comprising a plurality of shell parts (1a-1c) intended to be articulated in swivelling according to their respective apexes (2a-2c) around a same swivel axis (I-I) and movable between an opened position and a covered position,
- in the covered position, the shell parts (1a-1c) are pivoted to overlap partially one with the others,
- in the opened position, the shell parts (1a-1c) are pivoted to overlap one with the others, the overlapping of the shell parts (1a-1c) being then more significant than the overlapping in the covered position,
**characterized in that** the shell parts (1a-1c) are movable in swivelling independently with regard to one another.

2. Device according to claim 1, **characterized in that** the shell parts (1a-1c) have a transverse profile roughly in the shape of a "C".

3. Device according to one of claim 1 or 2, **characterized in that** it comprises sealing means (12a, 12b) between the adjacent shell parts (1a-1c), preferably joints (120a, 120b) which are compressed between the adjacent shell parts (1a-1c) when the latter are overlapping one with the others.

4. Device according to one of claims 1 to 3, **characterized in that** the shell parts (1a-1c) are made of plastic, preferably of a transparent polycarbonate.

5. Land vehicle being movable and displaceable on a longitudinal direction (II-II) and comprising at least a control cabin (4) with a pilot seat (13a), **characterized in that** it comprises a covering device according to one of the claims 1 to 4.

6. Vehicle according to claim 5, **characterized in that:**
- the shell parts (1a-1c) are articulated in swivelling on the vehicle frame with regard to their respective apexes (2a-2c) around the swivel axis (I-I) which is transverse,
- in an opened position, the shell parts (1a-1c) are pivoted frontward of the vehicle and/or backward of the vehicle, leaving at least the pilot cabin (4) of the vehicle uncovered,
- in the covered position, the shell parts (1a-1c) are pivoted to overlap only partially one with the others in order to, laterally and from above, overlap at least a part of the pilot cabin (4),
- the shell parts (1a-1c) are formed in order to be able to cooperate one with the others in a totally covered position for the complete covering of the pilot cabin (4).

7. Vehicle according to one of claim 5 or 6,
**characterized in that:**
- several back shell parts (1b, 1c) can be pivoted backward of the vehicle in an opening position in which they are engaged in a dedicated housing (7) in the vehicle fairing (8),
- at least a front shell part (1a) can be pivoted frontward of the vehicle in an opening position, and is movable independently of the back shell parts (1b, 1c).

8. Vehicle according to claim 7, **characterized in that** it includes two back shell parts (1b, 1c) and a front shell part (1a).

9. Vehicle according to one of claims 5 to 8, **characterized in that** it comprises locking means of the shell parts (1a-1c) at least for the totally covered position.

10. Vehicle according to one of claims 5 to 9, **characterized in that** it includes a peripheral frame with double beam (17).

11. Vehicle according to one of claims 5 to 10, **characterized in that** it includes a passenger cabin (15) located behind the pilot cabin (4) and also capable of being selectively, laterally and from above, uncovered or covered by one or several shell parts (1b-1c), preferably with a passenger seat (13b) located at a height (h) below or equal to the height (H) of the passenger seat (13a).

12. Vehicle according to one of claims 5 to 11, **characterized in that** it is a single track vehicle, preferably with two wheels.

13. Vehicle according to claim 12, **characterized in that** the pilot cabin (4) is a pilot cabin with a flat floor, preferably of a scooter type.

14. Vehicle according to one of claim 12 or 13, **characterized in that** it comprises a stabilisation device (9) for the vehicle to be maintained in vertical position when stopped, comprising preferably retractable lateral sliding wheels (9a).

## Patentansprüche

1. Vorrichtung zum Abdecken einer Fahrerposition für ein Landfahrzeug, wobei:
- die Vorrichtung zum Abdecken einer Fahrerposition eine modulierbare Karosserie (1) ist, die eine Vielzahl von Karosseriebogenstücken (1a bis 1c) umfasst, die dazu gedacht sind, gemäß ihren jeweiligen Scheitelpunkten (2a bis 2c) um ein und dieselbe Schwenkachse (I-I) herum schwenkend gelenkig angebracht zu werden und zwischen einer Öffnungsposition und einer Abdeckungsposition verschiebbar zu sein,
- in der Abdeckungsposition die Karosseriebogenstücke (1a bis 1c) sich gegenseitig nacheinander teilweise überdeckend verschwenkt werden,
- in der Öffnungsposition die Karosseriebogenstücke (1a bis 1c) sich gegenseitig überdeckend verschwenkt werden, wobei die Überdeckung der Karosseriebogenstücke (1a bis 1c) dann größer ist als in der Abdeckungsposition,
**dadurch gekennzeichnet, dass** die Karosseriebogenstücke (1a bis 1c) unabhängig voneinander durch Verschwenken verschiebbar sind.

2. Vorrichtung nach Anspruch 1, **dadurch gekennzeichnet, dass** die Karosseriebogenstücke (1a bis 1c) ein im Wesentlichen C-förmiges Querprofil aufweisen.

3. Vorrichtung nach einem der Ansprüche 1 oder 2, **dadurch gekennzeichnet, dass** sie Dichtungsmittel (12a, 12b) zwischen den angrenzenden Karosseriebogenstücken (1a bis 1c) umfasst, bevorzugt Dichtungen (120a, 120b), die zwischen den angrenzenden Karosseriebogenstücken (1a bis 1c) zusammengedrückt werden, wenn diese einander teilweise überdecken.

4. Vorrichtung nach einem der Ansprüche 1 bis 3, **dadurch gekennzeichnet, dass** die Karosseriebogenstücke (1a bis 1c) aus Kunststoff hergestellt sind, bevorzugt aus durchsichtigem Polykarbonat.

5. Landfahrzeug, das sich in einer Längsrichtung (II-II) entfaltet und fortbewegt und mindestens eine Fahrerposition (4) mit einem Fahrersitz (13a) umfasst, **dadurch gekennzeichnet, dass** es eine Abdeckungsvorrichtung nach einem der Ansprüche 1 bis 4 umfasst.

6. Fahrzeug nach Anspruch 5, **dadurch gekennzeichnet, dass:**
- die Karosseriebogenstücke (1a bis 1c) am Fahrgestell des Fahrzeugs gemäß ihren jeweiligen Scheitelpunkten (2a bis 2c) um die querliegende Schwenkachse (I-I) herum schwenkend gelenkig angebracht sind,
- in der öffnungsposition die Karosseriebogenstücke (1a bis 1c) zum vorderen Teil des Fahrzeugs und/oder zum hinteren Teil des Fahrzeugs verschwenkt werden, wobei mindestens die Fahrerposition (4) des Fahrzeugs aufgedeckt bleibt,
- in der Abdeckungsposition die Karosseriebogenstücke (1a bis 1c) verschwenkt werden, indem sie sich nur teilweise gegenseitig überdecken, um mindestens einen Teil der Fahrerposition (4) seitlich und von oben abzudecken,
- die Karosseriebogenstücke (1a bis 1c) derart ausgestaltet sind, dass sie zusammen in einer vollstandigen Abdeckungsposition für das vollständige Schließen der Fahrerposition (4) zusammenwirken können.

7. Fahrzeug nach einem der Ansprüche 5 oder 6,
**dadurch gekennzeichnet, dass:**
- mehrere hintere Karosseriebogenstücke (1b, 1c) zum hinteren Teil des Fahrzeugs in der Öffnungsposition verschwenkt werden können, in der sie in eine Aufnahme (7) eingreifen, die in der Verkleidung (8) des Fahrzeugs bereitgestellt wird,
- mindestens ein vorderes Karosseriebogenstück (1a) zum vorderen Teil des Fahrzeugs in der Öffnungsposition verschwenkt werden kann und unabhängig von den hinteren Karosseriebogenstücke (1b, 1c) manövrierbar ist.

8. Fahrzeug nach Anspruch 7, **dadurch gekennzeichnet, dass** es zwei hintere Karosseriebogenstücke (1b, 1c) und ein vorderes Kazosseriebogenstück (1a) umfasst.

9. Fahrzeug nach einem der Ansprüche 5 bis 8, **dadurch gekennzeichnet, dass** es Mittel zum Verriegeln der Karosseriebogenstücke (1a bis 1c) mindestens in der vollständigen Abdeckungsposition umfasst.

10. Fahrzeug nach einem der Ansprüche 5 bis 9, **dadurch gekennzeichnet, dass** es ein Fahrgestell mit einem umlaufenden Doppelträgerrahmen (17) umfasst.

11. Fahrzeug nach einem der Ansprüche 5 bis 10, **dadurch gekennzeichnet, dass** es eine Passagierposition (15) umfasst, die hinter der Fahrerposition (4) bereitgestellt wird und ebenfalls wahlweise seitlich und von oben durch eines oder mehrere Karosseriebogenstücke (1a bis 1c) aufgedeckt oder abgedeckt werden kann, bevorzugt mit einem Passagiersitz (13b), der sich auf einer Höhe (h) befindet, die kleiner oder gleich der Höhe (H) des Fahrersitzes (13a) ist.

12. Fahrzeug nach einem der Ansprüche 5 bis 11, **dadurch gekennzeichnet, dass** es einspurig, bevorzugt zweirädrig ist.

13. Fahrzeug nach Anspruch 12, **dadurch gekennzeichnet, dass** die Fahrerposition (4) eine Fahrerposition mit flachem Boden ist, bevorzugt nach Art eines Motorrollers.

14. Fahrzeug nach einem der Ansprüche 12 oder 13, **dadurch gekennzeichnet, dass** es eine Stabilisierungsvorrichtung (9) umfasst, um es im Stillstand in senkrechter Position zu halten, bevorzugt einziehbare seitliche Stützräder (9a) umfassend.
